# EUROPEAN PATENT APPLICATION

(11) **EP 2 515 506 A1**
(43) Date of publication of application: **24.10.2012**
(21) Application number: 11162985.3
(22) Date of filing: 19.04.2011
(51) Int. Cl.: H04L 29/12, H04L 12/24

(54) **Auto-configuration of network devices**

(71) Applicant: SIEMENS AKTIENGESELLSCHAFT, 80333 München (DE)
(72) Inventor: Hansen, Ulrich Vestergaard B., 7400, Herning (DK); Hoejgaard, Jannik, 7330, Brande (DK); Kulkarni, Vivek, 82008, Unterhaching (DE)

(57) **Abstract**

It is described a network device (100) having at least two device components (104, 104a) and being connectable to a data communication network (102). Each device component (104, 104a) has a communication interface (106) which is accessible by using an internal network address associated therewith. The network device (100) further comprises an address translation device (108) having an internal interface for communication with the communication interface of each of the at least two device components (104, 104a) and an external interface for communication with an external device (112, 200) different from the network device (100) and being configured for determining, based on a received target identifier, the internal network address associated with the communication interface (106) of a first device component (104a). The address translation device (100) is further configured for forwarding the external data (133) to the first device component (104a) by using the internal network address of the first device component (104a). Further, a configuration device (200) for providing the external data is provided.

## Description

### FIELD OF INVENTION

The present invention relates to the field of network devices which are connectable to a data communication network.

### BACKGROUND OF THE INVENTION

A configuration of network devices is known in the art and may include the setting of a network address, for example an internet protocol (IP) network address. The network address of a network device may be static or dynamic. A static network address is configured manually and is statically associated with the network device or the respective network interface thereof. Further, it is known to assign a network address by a dynamic host configuration protocol server (DHCP server), where usually the network device does not receive the same network address upon repeated connection to the DHCP server. In order to assign the same network address to the network device while still using a DHCP server, it is known to configure the DHCP server accordingly based on a unique identifier such as a media access control address (MAC address) of the respective network interface of the network device. For example, the MAC address may be associated with a specific network address in the DHCP server. This is specified in RFC 3046: "The new option is called the Relay Agent Information option and is inserted by the DHCP relay agent when forwarding client-originated DHCP packets to a DHCP server. Servers recognizing the Relay Agent Information option may use the information to implement IP address or other parameter assignment policies. The DHCP Server echoes the option back verbatim to the relay agent in server-to-client replies, and the relay agent strips the option before forwarding the reply to the client."

However, associating the MAC addresses of a network device with respective network addresses requires a time-consuming manual configuration. This problem is even more severe in cases where a network device comprises two or more components which have a network interface.

In view of the above-described situation, there exists a need for an improved technique that enables to provide a network device which substantially avoids or at least reduces one or more of the above-identified problems.

### SUMMARY OF THE INVENTION

This need may be met by the subject matter according to the independent claims. Advantageous embodiments of the herein disclosed subject matter are described by the dependent claims.

According to a first aspect of the invention there is provided a network device being connectable to a data communication network, the network device comprising: at least two device components, each device component having a communication interface for communicating data, the communication interface being accessible by using an internal network address associated with the communication interface; an address translation device having an internal interface for communication with the communication interface of each of the at least two device components and an external interface for communication with an external device different from the network device; and the address translation device being configured for receiving external data from the data communication network and an target identifier identifying a first device component out of the at least two device components; the address translation device being further configured for determining, based on the target identifier, the internal network address associated with the communication interface of the first device component; and the address translation device being further configured for forwarding the external data to the first device component by using the internal network address of the first device component.

This aspect of the herein disclosed subject-matter is based on the idea that by providing the at least two device components of a network device with an internal internet address and further providing an address translation device which forwards data between the external data communication network and the device components of the internal network, the configuration effort workload for configuring the network device can be reduced.

The data communication network may be any suitable network, for example a wireless or wired communication network, a local area network or, in another example, the internet.

According to an embodiment, the external data and the target identifier are included in a single transmission, e.g. in a single data packet. In an embodiment, the external data include configuration data for the device component identified by the target identifier. However, in other embodiments, the external data may also be adapted for controlling, monitoring, etc. of the device component identified by the target identifier.

According to an embodiment, the network device and/or the at least two device components are configured for using a specific protocol for the communication therebetween. One example of such a protocol is the internet protocol (IP). However, any other protocol may also be used instead.

It should be understood that the first device component which is one of the at least two device components does not have a special meaning among the at least two device components. Rather referring to this device component as the "first" device component only simplifies the referral to one of the at least two device components. Hence, referral to one of the device components as "first device component" shall not be construed as limiting the herein disclosed subject matter.

According to an embodiment, the address translation device is configured for receiving configuration data, the configuration data being adapted for configuring the address translation device, e.g. for setting a global network address of the external interface of the address translation device. In other embodiments, the configuration data are adapted for configuring one or more of the at least two device components.

Generally herein, the term "global network address" refers to a network address of the data communication network outside the network device. In an embodiment where the data communication network is the internet, the global network address is indeed a "globally valid" network address. However, in other embodiments the data communication network may be a local area network comprising the network device (e.g. a private local area network in the sense of the internet protocol). In such embodiments, the term "global" in "global network address" does of course not refer to a globally valid network address but rather to a private address in the local area network.

According to an embodiment, the address translation device is configured for receiving network address translation data associating the internal network address of the first device component with the target identifier identifying the first device component. Hence, according to this embodiment the address translation device may be provided with the network address translation data at any suitable time. According to a further example of such an embodiment, already existing network address translation data on the address translation device may be updated.

According to a further embodiment, the internal interface and the external interface of the address translation device are implemented by a single physical network interface.

For example, in an embodiment, the single physical network interface comprises a first logical interface being associated with an internal network address adapted for communication with the at least one device component; and the single physical network interface further comprises a second logical interface being associatable with a global network address uniquely identifying the address translation device in the data communication network.

In an embodiment the logical network interfaces are logical interfaces of a virtual local area network (VLAN) in which traffic in at least two logical networks is separated by inclusion of network identifiers which identify the respective logical network to which a traffic portion belongs.

According to an embodiment, the internal network address of the at least one device component is a fixed network address. For example, in an embodiment the first logical network interface is statically configured while the second logical network interface is dynamically configured.

A fixed or static internal network address has the advantage that a plurality of network devices can be produced having the same internal network configuration. This facilitates maintenance as well as production, since service workers or automatic services within the network device can address the communication interface of each of the at least two device components after production without requiring a configuration of the network addresses of the device components. Together with a global network address that is associated with the address translation device in accordance with embodiments disclosed herein, the at least two device components of the network device, or the respective communication interfaces thereof, are addressable by the address translation device as well as by an external network component of the data communication network.

According to an embodiment, the address translation device is configured for broadcasting a configuration request to the external network, the configuration request including an device identifier identifying the network device.

Such an embodiment has the advantage that it allows a configuration device to select configuration data for the network device identified by the device identifier and provide the configuration data to the network device. In particular, this allows for an automatic configuration of the network device. For example, in an embodiment, the network device may be configured to broadcast the configuration request after each powering up of the network device. In response hereto, the network device may receive the configuration data for the address translation device or, in another embodiment, the at least two device components from a configuration device which has received the configuration request of the network device.

An example of a network device according to the herein disclosed subject-matter is a power generation device, for example a wind turbine device. In particular when establishing a wind farm having a plurality of wind turbine devices, in accordance with embodiments of the herein disclosed subject-matter each wind turbine device may have an initial configuration of its internal network addresses that are identical among the wind turbine devices. This initial configuration may be changed if necessary. However, according to an embodiment, the initial configuration is maintained over extended periods, in particular over a plurality of power ups and power downs, or is maintained over the lifetime of the network device.

According to an embodiment, mapping of individual global network addresses to the internal network addresses of the individual device components of the wind turbine devices is performed by the address translation device. In another embodiment, the address translation device is adapted for mapping of a port number to the internal network address of the associated individual device component. According to an embodiment, the port number is an identifier of a logical port associated with an external network address of the address translation device. Usage of such port numbers is well known to those skilled in the art, e.g. in the form of transfer layer protocols such as transmission control protocol (TCP) specified in the framework of the internet protocol (IP). Other mapping schemes are also possible.

According to a second aspect of the herein disclosed subject-matter, there is provided a configuration device for providing configuration data to an address translation device of at least one network device over a data communication network, the configuration device comprising: a receiving unit having an interface for receiving a configuration request from a network device, the configuration request including a device identifier identifying the network device; and a configuration unit for providing to the network device, in response to the configuration request, configuration data to an address translation device of the network device.

Such a configuration device may be used for automatically configuring network devices, wherein the configuration device has stored in a storage thereof at least one device identifier of a network device and the associated configuration data for configuring the network device, e.g. its address translation device and/or its device components.

According to an embodiment, the configuration data is adapted for configuring the address translation device. According to a further embodiment, the configuration data is adapted for configuring at least one device component of the network device.

According to a further embodiment, the configuration data for the address translation device specify a global network address uniquely identifying the address translation device in the data communication network which includes the network device and the configuration device.

According to a further embodiment, the configuration data for the address translation device specify a global network address uniquely identifying an device component of the network device in the data communication network which includes the network device and the configuration device.

According to further embodiments of the second aspect, the configuration device is adapted for providing the functionality as disclosed with regard to embodiments of the first aspect and/or for providing the functionality as required by embodiments of the first aspect.

According to a third aspect of the herein disclosed subject matter a method of operating a network device is provided, wherein the network device comprises at least two device components, the network device further comprises an address translation device being configured for communicating with an external data communication network and being configured for communicating with the at least two device components via an internal data communication network of the network device, the method comprising: (i) receiving external data from the data communication network and an target identifier identifying a first device component out of the at least two device components; (ii) determining, based on the target identifier, the internal network address associated with the communication interface of the first device component; and (ii) forwarding the external data to the first device component by using the internal network address of the first device component.

According to an embodiment, the method further comprises: receiving, by the address translation device, configuration data, the configuration data being adapted for configuring the address translation device by associating a global network address with the external communication interface of the address translation device, the global network address uniquely identifying the external communication interface in the data communication network.

According to further embodiments, the method according to the third aspect is adapted to provide the functionality as disclosed with regard to the first aspect.

According to a fourth aspect of the herein disclosed subject matter, there is provided a method of operating a configuration device for providing configuration data to an address translation device of network devices, the method comprising: (i) receiving a configuration request from a network device, the configuration request including a device identifier identifying the network device; (ii) providing to the network device address translation data associating the internal network address of a device component (usually of two or more device components) of the network device with a target identifier identifying the device component in the data communication network.

According to further embodiments, the method according to the fourth aspect is adapted to provide the functionality as disclosed with regard to the second aspect.

According to a fifth aspect of the herein disclosed subject-matter, there is provided a computer program for processing a physical object, namely a target identifier, the computer program being adapted for, when being executed by a data processor device, controlling the method as set forth in the third aspect or an embodiment thereof.

According to a sixth aspect of the herein disclosed subject-matter, there is provided a computer program for processing a physical object, namely a configuration request, the computer program being adapted for, when being executed by a data processor device, controlling the method as set forth in the fourth aspect or an embodiment thereof.

As used herein, reference to a computer program is intended to be equivalent to a reference to a program element and/or a computer readable medium containing instructions for controlling a computer system to effect and/or coordinate the performance of the above described method.

The computer program may be implemented as computer readable instruction code by use of any suitable programming language, such as, for example, JAVA, C++, and may be stored on a computer-readable medium (removable disk, volatile or nonvolatile memory, embedded memory/processor, etc.). The instruction code is operable to program a computer or any other programmable device to carry out the intended functions. The computer program may be available from a network, such as the World Wide Web, from which it may be downloaded.

Embodiments of the herein disclosed subject matter may be realized by means of a computer program respectively software. However, embodiments of the herein disclosed subject matter may also be realized by means of one or more specific electronic circuits respectively hardware. Furthermore, the embodiments of the herein disclosed subject matter may also be realized in a hybrid form, i.e. in a combination of software modules and hardware modules.

In the above there have been described and in the following there will be described exemplary embodiments of the subject matter disclosed herein with reference to a network device, a configuration device, a method of operating a network device and a method of operating a configuration device. It has to be pointed out that of course any combination of features relating to different aspects of the herein disclosed subject matter is also possible. In particular, some embodiments have been or will be described with reference to apparatus type embodiments whereas other embodiments have been or will be described with reference to method type embodiments. However, a person skilled in the art will gather from the above and the following description that, unless other notified, in addition to any combination of features belonging to one aspect also any combination between features relating to different aspects or embodiments, for example even between features of the apparatus type embodiments and features of the method type embodiments, or any combination between network device embodiments and configuration device embodiments is considered to be disclosed with this application.

The aspects and embodiments defined above and further aspects and embodiments of the present invention are apparent from the examples to be described hereinafter and are explained with reference to the drawings, but to which the invention is not limited.

### BRIEF DESCRIPTION OF THE DRAWINGS

Fig. 1 shows a network device in accordance with embodiments of the herein disclosed subject-matter.
Fig. 2 shows a network device and a configuration device in accordance with embodiments of the herein disclosed subject-matter.

### DETAILED DESCRIPTION

The illustration in the drawings is schematic. It is noted that in different figures, similar or identical elements are provided with the same reference signs or with reference signs which are different from the corresponding reference signs only within an appended character.

Some embodiments of the herein disclosed subject matter relate to IP enabled devices, i.e. network devices that are capable of communicating via the internet protocol (IP).

Methods for configuring network devices that communicate via the internet protocol are known. In the following, a possible implementation of conventional techniques in a wind park is discussed in order to more clearly pronounce the advantages of aspects and embodiments of the herein disclosed subject matter. However, it should be understood that the aspects and embodiments of the herein disclosed subject matter are not limited to wind parks. Rather, these teachings can be applied to any network device that is connectable to a data communication network and comprises at least two device components.

Further, embodiments are configured to overcome a difficult, time consuming and human error prone methodology to assign IP address settings, such as IP address, Subnet mask, Default gateway (GW), required for IP enabled devices to be able to talk IP on a network, to device components in network devices such as wind turbines.

### NETWORK CONFIGURATION BY USING CONVENTIONAL TECHNIQUES

Having now first regard to conventional systems, a technical challenge may be that each network component needs to be manually configured for each individual wind park and individual turbine device which requires special techniques to ensure that the right device has been assigned the right IP address. This is highly dependent on manual interactions. For establishing a wind park, a physical and logical network, per fiber/or copper network, is required between each individual wind turbine and the specific IP configuration server before IP configurations can be deployed to the wind turbine under consideration. IP configuration is a prerequisite before turbine equipment located within a specific turbine can connect and exchange data with each other. In some embodiments the main interface computer within the turbine, e.g. a turbine interface computer (TIC), does not store any information about current production and faults. Nor does it save any historical data before it has received its initial configuration including IP settings.

In comparison with the herein disclosed subject matter, the turbine interface computer in the turbine may use a step-by-step algorithm to determine the IP address of the configuration server during its initial startup which gets in action right after the turbine has been energized for the first time. However, such a step-by-step approach is time-consuming and takes major share in time required to make the SCADA network functioning. As is known, SCADA stands for supervisory control and data acquisition. It generally refers to industrial control systems: computer systems that monitor and control industrial and/or infrastructure-based / facility-based processes.

According to an embodiment, an computer program, e.g. an algorithm, is implemented on the Turbine Interface Computer (TIC) to ensure that each specific TIC receives its correct IP settings from the IP Configuration Server. In an embodiment, the algorithm is utilizing Layer 3 broadcast frames or any other suitable technique, e.g. a technique disclosed herein, to tell the IP Configuration Server that it is alive, online and would like to receive its configuration. The frame is broadcasted out on its local subnet on a specific UDP port of which the IP Configuration Server is listening. A device identifier, e.g. the turbine's unique serial number (S/N) is included in the broadcast frame. Hence, in this case, the S/N is used as a turbine identifier. The problem is if the network has been segmented in smaller subnets and the TIC and the IP Configuration Server no longer in the same subnet. If this is the case, the IP Configuration Server might never receive the broadcast message sent from the TIC.

By using conventional techniques, when a wind turbine device is being assembled it is important to know to which wind park it will go. However the final position of the wind turbine is not known in the beginning. Therefore it is difficult if not impossible to finalize or modify configurations of the wind turbine before it has been erected and energized on site. Hence, using conventional techniques, the final configuration and/or modification of the wind turbine device would have to be carried out only after the wind turbine device has been erected, either by manual human procedures or automated software procedures.

Hence the configuration of the wind turbine device may involve in particular the following problems:

### Problem A:

A wind turbine consists of several Ethernet enabled device components. These devices components require IP address settings configured before they can talk IP. IP settings can be set in two ways: Static or dynamically assigned by a DHCP server ("Dynamic Host Configuration Protocol server"). The DHCP server allocates by design IP addresses dynamically meaning that IP addresses being allocated cannot be controlled without time-consuming manual configuration of the DHCP server. By an extension to DHCP, described in RFC3046, it is possible to overcome the limitation of the nature of DHCP. This document introducing the respective DHCP option 82 is available from "http://tools.ietf.org/rfc/rfc3046.txt". DHCP Option 82 would enable a manufacturer of a wind turbine to assign IP addresses based on which physical port on the Ethernet switch in the wind turbine where the DHCP Discover message was received. This requires a DHCP Option 82 specific configuration in the Ethernet switch of the wind turbine. Without this configuration on the Ethernet switch in the wind turbine the IP address will not be assigned to the end device.

Hence using the DHCP option 82, the IP address allocation procedure using conventional techniques may include the following steps:
1. Configure the DHCP server with Option 82 reservations based on MAC-identifier from switches. This is done manually and can be very time consuming depending on how many devices that needs IP settings.
2. Prepare configuration files for Ethernet switches containing DHCP Option 82 information and other site specific network configuration settings.
3. Erect the wind turbine and connect fiber strands or copper cables to the Ethernet switch in the wind turbine to assure that network messages can be transmitted outside of the wind turbine.
4. Note and manually type in the MAC-address of the first Ethernet switch (DHCP-Relay node) of the wind turbine in the DHCP Server.
5. Wait for Ethernet devices in the turbine to send DHCP-discover messages.
6. The Ethernet device will receive its IP settings via DHCP server.

### Problem B:

The first section of the problem is not being solved today. The service running on the TIC responsible for storing the information in databases are not being initialized before the TIC has been identified by the IP Configuration Server and received its final configuration. The services running on the TIC is launched in a systematic chain. If the procedure explained in Problem A is not started successfully, the service explained in Problem B will never be started. The identification service is one of the first services to be started.

The TIC does not trust the integrity of the data before it has been fully configured with all parameters received from the IP Configuration Server.

The algorithm that tries to identify the location of the IP Configuration Server would only work without human interactions if the TIC successfully targets the IP Configuration Server.

A possible automated IP configuration procedure which uses conventional techniques is described below.

The configuration / settings allocation procedure for the TIC may be as follows:
1. The TIC executes its normal DHCP process asking for a dynamic IP address. The assigned IP address could be either i) The one it would receive from the IP configuration server later in the process or ii) a dynamically assigned IP address (temporary IP address) if DHCP Option 82 is not implemented.
2. After the TIC has received a temporary IP address it builds a list of targets and tries to tell the IP configuration server that is it alive. For example, all messages may be sent to UDP port 49000. The following exemplary scenarios are possible:
   a) If TIC knows (in normal cases, it does not) WPS server IP Address / IP Configuration server, it sends a message requesting further configuration parameters. Here WPS server stands for Wind Power SCADA (WPS) server. It is a SCADA server specifically developed for use in Wind farms.
   b) The TIC does not know the IP address of the IP Configuration Server, but it knows the IP address of the DHCP server. Therefore it sends a Layer 3 IP message to the IP address of which it received its IP address on UDP port 49000. If the DHCP server is not hosting the IP Configuration server it will try a series of logical attempts based on the IP address received from the DHCP Server, for example:
      i. x.x.x-1.100
      ii. x.x.x+1.100
      iii. x.x.x-2.100
      iv. x.x.x+2.100
      v. x.x.x.100
   c) If any of the above mentioned methods under step b) does not work TIC waits 5 minutes and tries again. It then returns to step a) of this procedure description.
3. After receiving a message request from TIC, the IP Configuration Server looks in its database to find the matching configuration / parameters to the S/N it has received in the message.
4. The IP Configuration Server then sends a list of parameters to the IP address from where it received the initial request.
5. The TIC parses the configuration file and changes its settings accordingly. After all settings have been changed it initiates a reboot, e.g. with 15 seconds delay.
6. After the reboot it starts up with the new configuration settings.

This configuration / settings allocation procedure can only be carried out if all steps of the "IP address allocation" have been executed successfully. If the process fails each TIC (one per wind turbine) will have to be configured manually by uploading a configuration file of XML format that is used to manually classify each turbine device because the TIC cannot associate itself with the IP configuration server automatically.

### NETWORK CONFIGURATION BY USING TECHNIQUES DISCLOSED HEREIN

In contrast to the above considerations which shall illustrate the possibilities of conventional configuration techniques for network devices such as wind turbine devices, embodiments of the herein disclosed subject matter may include one or more of the following features.

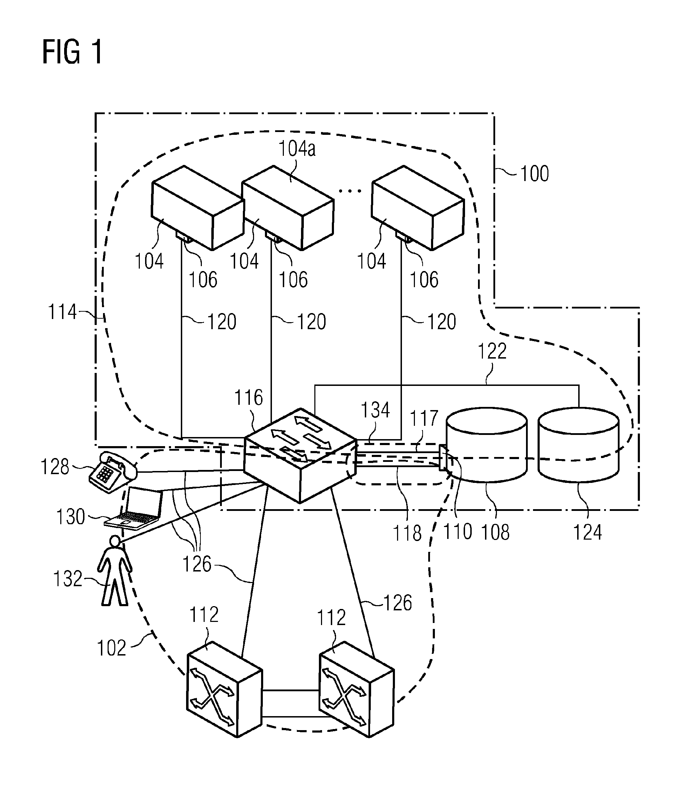

Fig. 1 shows a network device 100 in accordance with embodiments of the herein disclosed subject-matter.

The network device 100 is connectable to a data communication network 102. The data communication network may be for example a local area network, a wireless local area network, or a public network such as the internet, just to name some examples.

The network device 100 comprises at least two device components 104 including a first device component 104a. Each device component 104 has a communication interface 106 for communicating data, wherein the communication interface 106 is accessible by using an internal network address associated with the communication interface 106.

The network device 100 further comprises an address translation device 108 having an internal interface for communication with the communication interface 106 of each of the at least two device components 104 and an external interface for communication with an external device different from the network device 100. The external device may be for example a switch 112 of a backbone switch infrastructure. In accordance with an embodiment, the internal interface and the external interface of the address translation device 108 is realized by a single physical interface 110 which provides the internal interface and the external interface as logical interfaces. Consequently, two IP addresses are associated with the physical network interface 110. These two different network addresses, an internal network address for communication with the internal network 114 and an external network address for communication with the external network 102. The network device 100 further comprises a switch 116 for communicatively coupling the components connected thereto. The switch 116 has a plurality of ports (not shown in Fig. 1) for establishing data communication links with the device entities of the network device, e.g. the at least two device components 104 and the address translation device 108. In particular, the switch 116 is configured for establishing an internal communication link 117 with the address translation device 108, an external communication link 118 with the address translation device 108, an internal communication link 120 with each of the at least two device components 104, an internal communication link 122 with a measurement sytem 124, and external data communication links 126 to external devices voice over IP phones 128, customer/third party equipments such as computers 130 of a customer/third party 132, and the backbone switch infrastructure, i.e. external switches 112.

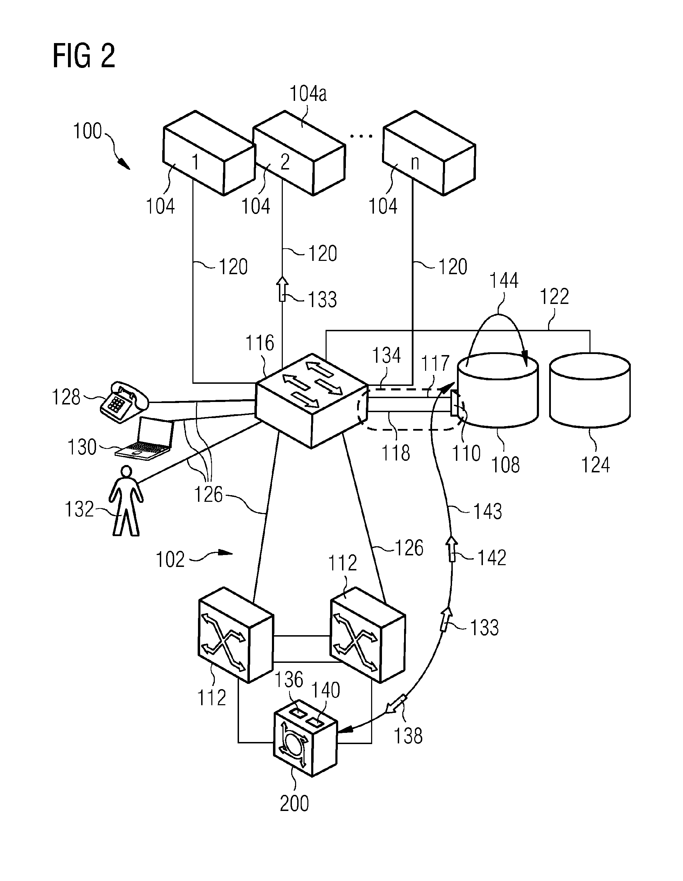

In an embodiment, the measurement system 124 is based on Industrial-PC inside a wind turbine device. The measurement system 124 may be used for condition monitoring (e.g. data from vibration sensors, not shown in Fig. 2) as well as detecting faults (e.g. from oil sensors, not shown in Fig. 2) in the wind turbine in order to decide on the right corrective actions need to be taken for successful and trouble-free operation of the wind turbine.

It is noted that in accordance with an embodiment of the herein disclosed subject-matter the internal communication link 117 and the external communication link 118 between the switch 116 and the address translation device 108 may be considered as a promiscuous link 134. The internal communication link 117 and the external communication link 118 may be provided by a single physical network interface 110 as disclosed above which has associated therewith two network addresses, thereby providing the two separate links 117, 118, e.g. by a well-known virtual local area network technology (VLAN technology). For example, in an embodiment at least the data provided via the internal communication link has associated therewith a network identifier indicating that the data belongs to the internal network 114. In other embodiments, data transmitted within the external network as well as data transmitted within the internal network has associated therewith a logical network identifier specifying to which of the two networks, internal network 114 and external network 102 the data belongs.

In accordance with an embodiment, the network address translation device 108 is realized by a computer program which runs on the turbine interface computer (TIC) of a wind turbine. Accordingly, in one embodiment the network device 100 is a wind turbine device and the at least two device components 104 are internal components of the wind turbine device 100.

Hence, in an embodiment a wind turbine device in accordance with the herein disclosed subject-matter includes one or more of the following features.

An embodiment relates to the provision of software NAT functionality that logically assigns or sets IP address configuration inside a controlled interface (i.e. the TIC). Utilizing the TIC as interface to other components within the turbine devices, provides the opportunity to use the functionalities offered by the different layers of the "Open Systems Interconnection Reference Model" (In short OSI Reference model). By enabling and utilizing higher levels of the OSI model makes it possible to use more advanced technology and thereby ensure the integrity of transferred data / parameters.

A further embodiments relates to providing an internal network in every turbine. This measure will provide for the following advantages:
1. It will simplify commissioning as service technicians would know the IP addresses of the internal network, as they are always the same in every turbine.
2. It is possible to monitor individual devices within a wind turbine device via the controlled interface (turbine interface computer) as the turbine interface computer (or more generally the network address translation device) is directly connected/connectable to the internal network.
3. By utilizing already known technology like IEEE 802.1Q VLAN Tagging on the turbine interface computer (TIC) (or the network interface 110 thereof) makes it possible to assign two IP addresses to a single NIC (Network Interface Card) and keep the traffic separated. This feature may be used in order to separate "internal" network and "external" network seen from the turbine interface computer's point of view.
4. According to an embodiment, the physical network topology and layout of a wind turbine device may be maintained unchanged. For implementing aspects and embodiments of the herein disclosed subject matter, only one new logical network adapter will be created on the TIC which needs to be IEEE 802.1Q aware. A logical adapter, tagging, transporting and being responsible for the "internal" network in the turbine, will be created ("Internal" IP Adapter"). According to an embodiment, the factory default setting for the TIC includes the following minimum configuration:
   a) IEEE 802.1Q feature needs to be enabled
   b) A static "internal" IP address unique to the internal network is provided.
5. Each device component in the wind turbine device will have access to an "Internal" and "External" network through software NAT in the TIC. The TCP/IP routing table on the TIC will determine whether to use the "Internal" or "External" network when there is a need to communicate with other devices.
6. With regards to problem B) described above, according to an embodiment an agent to enhance the functionality of the TIC IP initialization process needs is provided. Two variants of a new "helper" agent may be provided. One for the TIC (turbine interface computer) and one for the server by which the DHCP Server is hosted.

The purpose of this agent for the server where the DHCP service is hosted is to act as an "helper" in case the DHCP service is not hosted on the same server as the IP Configuration Server by responding to the TIC where it can find the IP Configuration Server if it's being asked. This can be done by using any suitable procedure, e.g. even by using conventional technology. For example, responding to the TIC where it can find the IP configuration server may be performed as described in the above section "NETWORK CONFIGURATION BY USING CONVENTIONAL TECHNIQUES".

The purpose of this agent for the TIC is to enable the TIC to receive information of where to find the IP Configuration Server via a customizable option in DHCP and thereby ensure that it will always be able to find the IP Configuration Server and get its final configuration in one go.

In an embodiment, both implementations are made to ensure support for legacy TIC's software and/or even older systems.

After the TIC has received its IP configuration from the configuration device (IP configuration server), it should act as a software network access translation (NAT) device mapping either 1-to-1 global addresses to turbine internal IP addresses or mapping TIC (IP address + port number = NAPT address) network address combination to turbine internal IP addresses within the same turbine on the internal network.

Fig. 2 shows a network device 100 and a configuration device 200 in accordance with embodiments of the herein disclosed subject-matter.

The network device 100 is identical to the network device 100 of Fig. 1. Hence, elements and features of the overall system shown in Fig. 2 which are similar or identical to respective figures of Fig. 1 have assigned therewith the same reference signs and the description thereof is not repeated here.

Further illustrated in Fig. 2 is the overall auto-configuration process through the turbine interface computer of the wind turbine device, wherein the turbine interface computer provides the address translation device 108 that is implemented on the turbine interface computer as a software component.

Fig. 2 shows a configuration device 200 in the form of an IP configuration server which is configured for providing configuration data to an address translation device 108 of at least one network device 100 over a data communication network 102. The configuration device 200 comprises a receiving unit 136 having an interface (not shown in Fig. 2) for receiving a configuration request 138 from the network device 100, i.e. the wind turbine device in one embodiment. The configuration request 138 includes a device identifier identifying the network device 100.

The configuration device 200 further comprises a configuration unit 140 for providing to the network device 100, in response to the configuration request 138, configuration data 142 for the address translation device 108 of the network device 100. Generally, communication between the configuration device 200 and the network device 100, as described in accordance with embodiments of the herein disclosed subject matter, is indicated at 143 in Fig. 3.

The auto-configuration process of the network device 100 first requires a configuration of the address translation device 108. Since the address translation device has an external data communication interface, which may be implemented as a logical network interface of the physical network interface 110, it may receive configuration parameters such as IP address, gateway, etc. by any suitable configuration process, e.g. by a dynamic host configuration protocol server (DHCP server). The DHCP server may be provided by the configuration device 200 or by a different entity. After the address translation device has been configured (resulting in a network configuration of the physical network interface 110 of the turbine if computer), the address translation device 108 will receive configuration data 133 which in one embodiment include configuration parameters for one device component (e.g. the first device component 104a) or, in another embodiment, for all of the at least two device components 104. As the address translation device 108 knows the internal IP addresses which are, in an embodiment, fixed, i.e. static internal IP addresses, the address translation device 108 is capable of forwarding the configuration data to the target device components 104.

In particular, according to an embodiment the address translation device 108 is configured for receiving external data 133 from the data communication network 102 and a target identifier identifying a first device component out of the at least two device components 104 via the external data communication link 118. Further, the address translation device 108 is configured for determining, based on the target identifier, the internal network address associated with the communication interface of the first device component 104a.

In accordance with an embodiment, the address translation device 108 is further configured for forwarding the external data 133 to the first device component 104a by using the internal network address of the first device component 104a. This forwarding of the external data 133 is performed via the internal communication link 117 between the switch 116 and the address translation device 108 and the internal communication link 120 between the switch 116 and the first device component 104a.

For a detailed discussion, the device components 104 in Fig. 2 have been numbered by numbers 1, 2, ..., n, corresponding to n device components of the network device 100. The individual device components are referred to as device component 1, device component 2, ..., device component n.

According to an embodiment, the address translation device 108 transmits a configuration request 138 to the configuration device 200, wherein the configuration request 138 includes a device identifier of the network device 100. The IP configuration server is configured for determining, depending on the device identifier, necessary configuration data for the individual device components 104 of the network device 100. Further, from the device identifier and respective data stored in the configuration device, the configuration device knows on which port the address translation device is configured to receive configuration data for a particular device component 104. Hence, in an embodiment of the herein disclosed subject-matter, wherein the address translation device 108 is configured for network address translation with port translation, the configuration device sends configuration data for the device component 1 at the associated port, e.g. port 1 to the external IP address of the address translation device 108. Similar, the configuration device 200 sends configuration data for the device component 2 to the associated port, e.g. port 2, of the IP address of the address translation device. Hence, accordingly in a respective embodiment of the herein disclosed subject-matter, the NAT with port translation table implemented in the address translation device 108 is as follows: NAT with port translation:

| | | |
|---|---|---|
| TICs IP address: port 1 | ↔ | internal IP address of device component 1 |
| TICs IP address: port 2 ...... | ↔ | internal IP address of device component 2 |
| TICs IP address: port n | ↔ | internal IP address of device component n |
| TICs IP address: port m | ↔ | internal IP address of the measurement system (m system) |

Hence, by means of the network address translation with port translation table the address translation device 108 is capable of mapping configuration data received on port 1 of its IP address to the internal IP address of device component 1, mapping the configuration data received on port 2 of its IP address to the internal IP address of device component 2, etc. Hence, the configuration of the network device can be performed automatically without manual interaction.

In an alternative embodiment, there is not used the external IP address of the address translation device 108 together a port number but rather a global IP address of the individual device components 104.

A corresponding 1:1 network address translation table is as follows:

| | | |
|---|---|---|
| Global IP address of device component 1 | ↔ | internal IP address of device component 1 |
| Global IP address of device component 2 | ↔ | internal IP address of device component 2 |
| Global IP address of device n | ↔ | internal IP address of device n |
| Global IP address of m system | ↔ | internal IP address of the measurement system |

It should be understood, that of course the configuration device 200 must be aware of at least the left column of the network address translation table that is used by the address translation device 108. In other words, the configuration device has stored therein a configuration parameter indicating in which way the individual device components 104 are to be addressed in the network device 100. Such configuration parameter of the configuration device 200 may be retrieved from a database depending on the device identifier which is received together with the configuration request 138. According to other embodiments, such configuration parameters may be determined by data exchange between the configuration device 200 and the network device 100, e.g. with the address translation device 108 of the network device 100.

The mapping of the global IP address of the respective device component or the port number of the respective device component into the internal IP address of the device component is indicated at 144 in Fig. 2.

Recapitulating some of the above described embodiments, the configuration process of the wind turbine device in accordance with embodiments of the herein disclosed subject matter is as follows:
1) The TIC has to find the IP configuration server identified itself with its turbine S/N (This number is unique for that turbine) according to the extension "helper" agent described above.
2) After the TIC has been configured it will receive the configuration on its external interface, for the other internal devices (Device 1, Device 2 and Device n on the drawing).
3) The TIC maintains the mapping table of internal IP address of each device to its external IP address (either global IP address or NAPT table).

It should be noted that a reference to a device entity is considered as disclosing a reference to a device component and as disclosing a reference to an address translation device. Reference to at least two device entities is considered as disclosing reference to at least two device components and as disclosing reference to an address translation device and at least one device component.

Further, while in some exemplary embodiments reference is made to the internet protocol version 4 (IPV4, it should be understood that this is only exemplary and that in other embodiments the protocol may be the internet protocol version 6 (IPV6) or any other suitable data communication protocol.

According to embodiments of the invention, any suitable entity disclosed herein, e.g. the logical interfaces, etc, are at least in part provided in the form of respective computer programs which enable a processor device to provide the functionality of the respective entities as disclosed herein. According to other embodiments, any suitable entity disclosed herein may be provided in hardware. According to other - hybrid - embodiments, some entities may be provided in software while other entities are provided in hardware.

It should be noted that any entity disclosed herein (e.g. device components, units and devices) are not limited to a dedicated entity as described in some embodiments. Rather, the herein disclosed subject matter may be implemented in various ways and with various granularity on device level or software module level while still providing the desired functionality. Further, it should be noted that according to embodiments a separate entity (e.g. a software module, a hardware module or a hybrid module) may be provided for each of the functions disclosed herein. According to other embodiments, an entity (e.g. a software module, a hardware module or a hybrid module (combined software/hardware module)) is configured for providing two or more functions as disclosed herein. According to respective embodiments, any device disclosed herein, e.g. the address translation device or the configuration device, may comprise a processor device including at least one processor for carrying out at least one computer program corresponding to a respective software module. It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state:
1) There is provided an agent for listening in broadcast address on (redundant) DHCP server
2) There is provided an automatic procedure to enable secure (by going through a trusted interface) end-to-end communication between IP devices (e.g. the device components of wind turbine devices) in a wind park.
3) There is provided configuring each of turbine devices through a trusted and secure software NAT (in this case TIC).

Aspects, embodiments and examples of the herein disclosed subject matter may provide the following advantages:
a) Ease in IP address configuration as no manual intervention is needed.
b) No need for a central DHCP Server with option 82 functionality (which leads to manual configurations in DHCP server).
   1. Maintains integrity of data from turbine devices as they will not depend on DHCP anymore.
   2. Avoid to many human error prone DHCP configurations
   3. Trusted configuration method based on turbine S/N rather than lower level OSI protocols.
c) Time-consuming manual procedures have been eliminated to reduce the time required to bring the SCADA system running and operational.
d) A secure process using the software NAT in TIC (Trusted device) as entry point to configure devices within a specific turbine.
e) The TIC (Turbine Interface Computer) can easily flag an alarm if it cannot access a device on it's internal network, it cannot see it's alive, or it cannot configure or reconfigure (for example, a limited time interval is specified to assure that all components have IP addresses in case of replacement)
f) TIC can log data from the beginning without central SCADA present because it can use the internal IP addresses to connect to the other devices within that particular wind turbine. This can be done in a secure way as the TIC is able to detect IP address conflicts (if the Ethernet switches has been replaced / is faulty / or otherwise enables two turbines internal network to be shared)

Finally, there is provided a network device having at least two device components and being connectable to a data communication network. Each device component has a communication interface which is accessible by using an internal network address associated therewith. The network device further comprises an address translation device having an internal interface for communication with the communication interface of each of the at least two device components and an external interface for communication with an external device different from the network device and being configured for determining, based on a received target identifier, the internal network address associated with the communication interface of a first device component. The address translation device is further configured for forwarding the external data to the first device component by using the internal network address of the first device component. Further, a configuration device for providing the external data is provided.

## Claims

1. Network device (100) being connectable to a data communication network (102), the network device (100) comprising:
- at least two device components (104, 104a), each device component (104, 104a) having a communication interface (106) for communicating data, the communication interface (106) being accessible by using an internal network address associated with the communication interface (106);
- an address translation device (108) having an internal interface for communication with the communication interface (106) of each of the at least two device components (104, 104a) and an external interface for communication with an external device (112) different from the network device (100); and
- the address translation device (108) being configured for receiving external data (133) from the data communication network (102) and an target identifier identifying a first device component (104a) out of the at least two device components (104, 104a);
- the address translation device (108) being further configured for determining, based on the target identifier, the internal network address associated with the communication interface (106) of the first device component (104a);
- the address translation device (108) being further configured for forwarding the external data (133) to the first device component (104a) by using the internal network address of the first device component (104a).

2. Network device (100) according to claim 1,
- the address translation device (108) being configured for receiving configuration data (142), the configuration data (142) being adapted for configuring the address translation device (108).

3. Network device (100) according to one of claims 1 or 2,
- the address translation device (108) being configured for receiving network address translation data associating the internal network address of the first device component (104a) with the target identifier identifying the first device component (104a).

4. Network device (100) according to one of claims 1 to 3,
- wherein the internal interface and the external interface of the address translation device (108) are implemented by a single physical network interface (110).

5. Network device (100) according to claim 4,
- the single physical network interface (110) comprising a first logical interface being associated with an internal network address adapted for communication with the at least one device component (104, 104a); and
- the single physical network interface (110) comprising a second logical interface being associatable with a global network address uniquely identifying the address translation device (108) in the data communication network (102).

6. Network device (100) according to one of the preceding claims, wherein the internal network address of the at least one device component (104, 104a) is a fixed network address.

7. Network device (100) according to one of the preceding claims,
- the address translation device (108) being configured for broadcasting a configuration request to the external network (102), the configuration request including an device identifier identifying the network device (100).

8. Network device (100) according to one of the preceding claims, the network device (100) being a power generation device, in particular a wind turbine device.

9. Configuration device (200) for providing configuration data to an address translation device (108) of at least one network device (100) over a data communication network (102), the configuration device (200) comprising:
- a receiving unit (136) having an interface for receiving a configuration request (138) from a network device (100), the configuration request (138) including a device identifier identifying the network device (100);
- a configuration unit (140) for providing to the network device (100), in response to the configuration request (138), configuration data (142) to an address translation device (108) of the network device (100).

10. Configuration device according to claim 9,
- the configuration data (142) for the address translation device specifying a global network address uniquely identifying the address translation device (108) in the data communication network (102) which includes the network device (100) and the configuration device (200).

11. Method of operating a network device (100), the network device comprising at least two device components (104, 104a), the network device (100) further comprising an address translation device (108) being configured for communicating with an external data communication network (102) and being configured for communicating with the at least two device components (104, 104a) via an internal data communication network (114) of the network device (100), the method comprising:
- receiving external data (133) from the data communication network (102) and an target identifier identifying a first device component (104a) out of the at least two device components (104, 104a);
- determining, based on the target identifier, the internal network address associated with the communication interface (106) of the first device component (104a);
- forwarding the external data (133) to the first device component (104a) by using the internal network address of the first device component (104a).

12. Method according to claim 11, further comprising:
- receiving, by the address translation device (108), configuration data (142), the configuration data (142) being adapted for configuring the address translation device (108) by associating a global network address with the external communication interface of the address translation device (108), the global network address uniquely identifying the external communication interface in the data communication network (102).

13. Method of operating a configuration device (200) for providing configuration data (142) to an address translation device (108) of network devices (100), the method comprising:
- receiving a configuration request (138) from a network device (100), the configuration request (138) including a device identifier identifying the network device (100);
- providing to the network device (100) address translation data (142) associating the internal network address of a device component (104) of the network device (100) with a target identifier identifying the device component (104, 104a) in the data communication network (102) .

14. A computer program for processing a physical object, namely a target identifier, the computer program being adapted for, when being executed by a data processor device, controlling the method as set forth in any one of claims 11 to 12.

15. A computer program for processing a physical object, namely a configuration request, the computer program being adapted for, when being executed by a data processor device, controlling the method as set forth in claim 13.
